# EUROPÄISCHE PATENTSCHRIFT

(11) **EP 2 712 694 B1**
(45) Veröffentlichungstag und Bekanntmachung des Hinweises auf die Patenterteilung: **15.03.2017**
(21) Anmeldenummer: 12186646.1
(22) Anmeldetag: 28.09.2012
(51) Int. Cl.: B23F 23/12, B23C 5/26

(54) **Werkzeughalter für einen Wälzfräser in Bohrungsausführung**
Tool holder for a hob in borehole design
Support d'outil pour une fraise-mère développante dans un type d'alésage

(43) Veröffentlichungstag der Anmeldung: 02.04.2014
(73) Patentinhaber: WFL Millturn Technologies GmbH & Co. KG, 4030 Linz (AT)
(72) Erfinder: Maringer, Herbert Ing., 4626 Sattledt (AT)
(74) Vertreter: Jell, Friedrich

(56) Entgegenhaltungen:
- EP-A1- 1 279 455
- US-A- 3 648 563

## Beschreibung

Die Erfindung betrifft einen Werkzeughalter für einen Wälzfräser in Bohrungsausführung mit einer zwischen einer Spindel und einem Gegenhalter vorgesehenen Spanneinrichtung, die ein, insbesondere in den Wälzfräser eingreifbares, Zentrierspannstück und einen in den Wälzfräser eingreifbaren Aufnahmedorn aufweist, der mit dem Zentrierspannstück zum Aufspannen des Wälzfräsers verspannt ist, wobei das Zentrierspannstück einen Flansch aufweist.

Um den Rundlauf eines zwischen einer Spindel und einem Gegenhalter eingespannten Wälzfräsers in Bohrungsausführung zu erhöhen, offenbart die DE2137396A1, an einem Werkzeughalter eine Spanneinrichtung vorzusehen, die ein Zentrierspannstück, einen Aufnahmedorn und eine Ankerschraube als wirkverbundenes Verbindungselement zwischen diesen beiden Teilen aufweist. Zentrierspannstück und Aufnahmedorn greifen in die axiale Bohrung des Wälzfräsers ein und werden mit Hilfe der Ankerschraube gegen den Wälzfräser gespannt. Das Zentrierspannstück formt einen Flansch mit einem Innenkegel aus, indem sich der Außenkegel des Gegenhalters zentriert. Durch eine derartige Konstruktion sind Fugenspiel zwischen Wälzfräser, Spanneinrichtung, Gegenhalter und/oder Spindel vergleichsweise schwer ausgleichbar, was ein zentriertes Einspannen des Wälzfräsers verhindern, womit Rundlauffehler nicht vermieden werden können. Derartige Rundlauffehler sind insbesondere dann zu befürchten, wenn der Wälzfräser vergleichsweise hohen Schnittkräften unterworfen wird.

Außerdem ist aus dem Stand der Technik eine Spanneinrichtung für einen Wälzfräser in Bohrungsausführung bekannt (EP1279455A1), bei dem der Wälzfräser axial und radial aufgespannt ist. Hierfür wird diese Spanneinrichtung mit einem in die axiale Bohrung des Wälzfräsers eingreifbaren Zentrierspannstück, mit einem in die axiale Bohrung des Wälzfräsers eingreifbaren Aufnahmedorn und mit einem Spannanker ausgestattet. Zentrierspannstück und Aufnahmedorn sind mit einem Außenkonus und einem radialen Bund versehen, wodurch diese bei Verspannung über den Spannanker für eine axiale und radiale Aufspannung des Wälzfräsers an der Spanneinrichtung sorgen. Zum Anschluss der Spanneinrichtung mit Aufnahmen der Werkzeugmaschine, z. B.: einer Werkzeugspindel und eines Gegenhalters, sind am radialen Bund Nuten vorgesehen. Nachteilig ist zwischen Zentrierspannstück, Aufnahmedorn und Wälzfräser ein vergleichsweise präziser Passsitz gefordert, um eine exakte Zentrierung des Wälzfräsers und damit hohe Rundlaufeigenschaften zu schaffen. Dies ist konstruktiv vergleichsweise aufwendig.

Die Erfindung hat sich nun die Aufgabe gestellt, einen Werkzeughalter für einen Wälzfräser in Bohrungsausführung der eingangs geschilderten Art derart konstruktiv auszuführen, dass der Wälzfräser schnell zentriert und nach seiner Zentrierung eine hohe Rundlaufeigenschaft sichergestellt werden können. Zudem soll der Werkzeughalter konstruktiv einfach und somit kostengünstig herstellbar sein.

Die Erfindung löst die gestellte Aufgabe dadurch, dass Zentrierspannstück und Aufnahmedorn je einen Flansch aufweisen, die je einen Radialstelltrieb mit wenigstens einem gegen die Spindel bzw. den Gegenhalter verstellbaren Stellglied zur Zentrierung der Spanneinrichtung lagern.

Weisen Zentrierspannstück und Aufnahmedorn je einen Flansch auf, die je einen Radialstelltrieb mit wenigstens einem gegen die Spindel bzw. den Gegenhalter verstellbaren Stellglied zur Zentrierung der Spanneinrichtung lagern, kann der aufgespannte Wälzfräser vergleichsweise einfach handhabbar gegenüber Spindel und Gegenhalter zentriert werden. Beide Radialstelltriebe können nämlich unabhängig voneinander betätigt werden, wodurch Rundlaufehler vergleichsweise schnell behoben werden können. Zudem können die Radialstelltriebe durch Erzeugung von Spannkräften auch Rundlauffehler in der Aufspannung des Wälzfräsers kompensieren, die auf die Spanneinrichtung zurückzuführen sind. Außerdem kann damit auch ein eventuelles Fugenspiel zwischen Spanneinrichtung, Spindel und Gegenhalter ausgeglichen werden, sodass selbst bei vergleichsweise hohen Schnittkräften kein Ausweichen des aufgespannten Wälzfräsers befürchtet werden muss. Der erfindungsgemäße Werkzeughalter kann daher standfest höchste Rundlaufeigenschaften am Wälzfräser sicherstellen. Außerdem kann bei einem Flansch konstruktiv relativ einfach ein Radialstelltrieb vorgesehen werden, sodass eine kostengünstige Lösung zur Verfügung gestellt werden kann, um höchste Rundlaufeigenschaften am Wälzfräser zu garantieren.

Im Allgemeinen wird erwähnt, dass bei Wälzfräsern in Hinblick auf deren Aufnahme durch den Werkzeughalter zwischen Wälzfräser in Bohrungsausführung und Wälzfräser in Schaftausführung unterschieden wird. Bei Bohrungsausführungen besteht eine durchgehende axiale Bohrung am Wälzfräser, welche axiale Bohrung zur Übertragung von Drehmoment verwendet werden kann. Diese axiale Bohrung kann auch zur Aufnahme einer Passfeder dienen. Unter Bohrung wird ein Loch jeglicher Form und Herstellung verstanden, das den Wälzfräser durchdringt. Bei einer Schaftausführung sind an den Enden des Werkzeugs Schäfte zur Drehmomentenübertragung vorgesehen.

Eine vergleichsweise hohe Steifigkeit am Werkzeughalter kann erreicht werden, wenn die Spindel und/oder der Gegenhalter in den jeweiligen Flansch von Zentrierspannstück oder Aufnahmedorn eingepasst ist bzw. sind. Zudem kann dies einen konstruktiv einfachen radialen Verstellmechanismus zum Zentrieren der Spanneinrichtung ermöglichen, indem das Stellglied auch radial gegen die Spindel bzw. den Gegenhalter verstellbar ausgeführt werden kann. Des Weiteren kann diese Passung auch das Montieren der Spanneinrichtung erleichtern, wodurch eine Vereinfachung der Handhabung des Werkzeughalters möglich ist.

Weist der Radialstelltrieb mehrere diametral gegenüberliegende Stellglieder auf, kann eine äußerst feinfühlige Kompensation von Rundlauffehlern am Fräswerkzeug ermöglicht werden, zumal damit auch eine mehrachsige Verstellung der Spanneinrichtung gegenüber Spindel und Gegenhalter möglich werden kann. Vorteilhaft können Stiftschrauben die Zentrierung des Fräswerkzeugs weiter erleichtern.

Die Konstruktionsverhältnisse können weiter vereinfacht werden, wenn Zentrierspannstück und Aufnahmedorn jeweils einstückig ausgebildet sind. Damit kann außerdem deren Steifigkeit erhöht werden.

Bekanntermaßen kann eine Verspannung zwischen Spannanker und Zentrierspannstück konstruktiv einfach ermöglicht werden, wenn die Spanneinrichtung einen Spannanker aufweist, der Zentrierspannstück und Aufnahmedorn axial verbindet und diese miteinander verspannt.

Weist die Spanneinrichtung ein mit dem Spannanker wirkverbundenes Spannelement auf, das zwischen Spannanker und Zentrierspannstück oder Aufnahmedorn vorgesehen ist, kann unabhängig vom Sitz des Wälzfräsers auf der Spanneinrichtung eine sichere radiale Aufspannung des Wälzfräsers ermöglicht werden, wenn das Spannelement mit dem Spannanker und Zentrierspannstück oder Aufnahmedorn zur Erzeugung einer radialen Aufspannung des Wälzfräsers zusammenwirkt. Die axiale Verspannung von Zentrierspannstück und Aufnahmedorn kann nämlich genutzt werden, den Außenkonus gegen das Zentrierspannstück oder den Aufnahmedorn zu drücken und eine Pressung zwischen Zentrierspannstück oder Aufnahmedorn und Wälzfräser zu erzeugen. Damit kann nicht nur ein eventuelles Fugenspiel an einer Spanneinrichtung ausgeglichen, sondern auch die Anforderungen an die Maßhaltigkeit beim Sitz der Spanneinrichtung reduziert werden. Ein verhältnismäßig aufwendig herzustellender Passsitz zwischen Spanneinrichtung und Wälzfräser kann somit vermieden werden. Zudem kann die erfindungsgemäße Spanneinrichtung auch bei einer Vielzahl an Wälzfräsern in Bohrungsausführung verwendet werden. Das Spannelement kann nämlich einen der axialen Bohrungen des Wälzfräsers entsprechenden Sitz am Zentrierspannstück bzw. Aufnahmedorn ausbilden. Eine universale Verwendbarkeit der Spanneinrichtung kann sich so ergeben, wobei durch diese axiale Vorspannung der Spannelemente auf den Wälzfräser hohe Biegesteifigkeit gewährleistet werden kann. Da ein Spannelement konstruktiv auch verhältnismäßig einfach zwischen dem Spannanker und Zentrierspannstück bzw. Aufnahmedorn vorsehbar ist, kann dies die Vorteile hinsichtlich der konstruktiven Einfachheit und Kostengünstigkeit mit den Vorteilen eines äußert genauen Rundlaufs am Wälzfräser vereinen.

Eine besonders feinfühlig handhabbare Zentrierung des Wälzfräsers kann sich ergeben, wenn Zentrierspannstück und/oder Aufnahmedorn einen Innenkonus aufweist/aufweisen, an dem ein Außenkonus des jeweiligen Spannelements anliegt. Zudem kann damit eine breiter wirkende Spannfläche geschaffen werden, um damit die radiale Aufspannung des Wälzfräsers am Sitz zu verbessern.

Ist je ein Spannelement für Zentrierspannstück und Aufnahmedorn vorgesehen, kann die Zentrierung des Wälzfräsers vereinfacht ermöglicht werden.

Einfache Montage- und Demontagebedingungen am Spannelement können sich eröffnen, wenn der Spannanker das hohle Zentrierspannstück und den hohlen Aufnahmedorn durchgreift. Der Spannanker kann dadurch von zwei Seiten zugänglich sein.

Spannanker und Spannelement können mechanisch einfach wirkverbunden werden, wenn der Spannanker mit seinem Außengewinde in ein Innengewinde des jeweiligen Spannelements eingreift.

Weist mindestens ein Spannelement einen radialen Spannbund auf, der an einen Steg des Zentrierspannstücks oder des Aufnahmedorns anliegt, kann die radiale Pressung des Spannelements begrenzt und damit die Gefahr einer Überbeanspruchung des Wälzfräsers beim Aufspannen niedrig gehalten werden. Außerdem kann so das Aufspannen des Wälzfräsers erleichtert werden, weil nach Erreichen der maximalen radialen Pressung lediglich auf die axiale Verspannung geachtete werden kann.

Lagert der radiale Spannbund einen Axialstelltrieb mit mindestens einem axial gegen den Steg verstellbaren Stellglied, kann die Zentrierung des Wälzfräsers gegenüber Zentrierspannstück bzw. Aufnahmedorn verhältnismäßig einfach eingestellt werden.

Vorzugsweise weist der Axialstelltrieb mehrere diametral gegenüberliegende Stellglieder auf, um damit eine mehrachsige Verstellung einfach handhaben zu können. Auf diese Weise kann des Weiteren auch die Rundlaufeigenschaft verbessert werden. Insbesondere können sich hierfür Stiftschrauben als Stellglieder auszeichnen.

Der Steg des Zentrierspannstück oder des Aufnahmedorns bildet einen radialen Bund für den Wälzfräser aus, um damit die Zug- bzw. Druckbelastung des Spannelements direkt in den Wälzfräser einzuleiten und diesen damit axial aufzuspannen. Diese erfindungsgemäße Aufspannung kann somit selbst Anforderungen von vergleichsweise engen Rundlauftoleranzen erfüllen.

Besonders kann sich die Erfindung auszeichnen, wenn der erfindungsgemäße Werkzeughalter bei einem Vorsatzkopf verwendet wird. Der Vorsatzkopf kann dazu zusätzlich eine Spindel, einen Gegenhalter und Radiallager, die zwischen Träger und Spindel und zwischen Träger und Gegenhalter (30) vorgesehen sind, aufweisen.

In den Figuren ist beispielsweise der Erfindungsgegenstand anhand mehrerer Ausführungsbeispiele näher dargestellt. Es zeigen
- Fig. 1: eine Schnittansicht in Querrichtung zu einem Werkzeughalter nach einem ersten Ausführungsbeispiel,
- Fig. 2: eine vergrößerte Teilansicht der Fig. 1 und
- Fig. 3: eine teilweise dargestellte Schnittansicht in Querrichtung zu einem Werkzeughalter nach einem zweiten Ausführungsbeispiel.

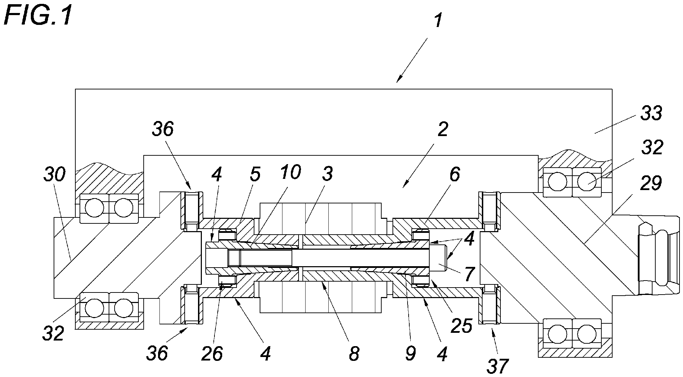

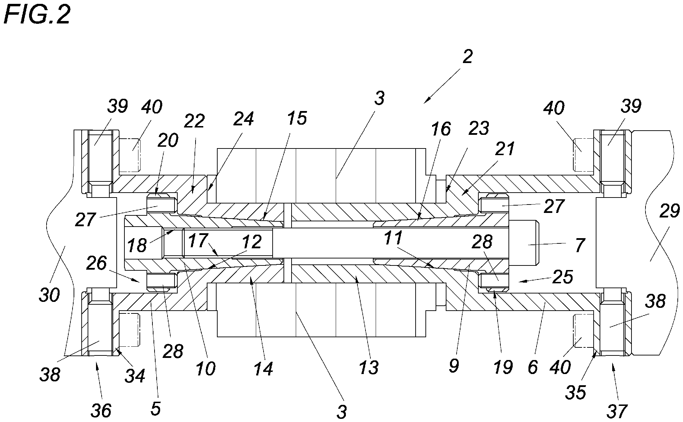

Das in Fig. 1 dargestellte erste Ausführungsbeispiel zeigt einen als Vorsatzkopf 1 ausgeführten Werkzeughalter 2. Der Werkzeughalter 2 ist derart ausgebildet, dass damit ein Wälzfräser 3 in Bohrungsausführung radial und axial aufgespannt werden kann. Zu diesem Zweck ist eine Spanneinrichtung 4 vorgesehen, die ein einstückiges Zentrierspannstück 5, einen einstückigen Aufnahmedorn 6 und einen Spannanker 7 aufweist, welche Teile der Fig. 2 verbessert entnommen werden können. Zentrierspannstück 5 und Aufnahmedorn 6 greifen in die axiale Bohrung 8 des Wälzfräsers 3 ein und werden durch den Spannanker 7 miteinander verspannt, wodurch der Wälzfräser 3 axial an der Spanneinrichtung 4 aufgespannt wird. Der Spannanker 7 drückt nämlich Zentrierspannstück 5 und Aufnahmedorn 6 axial an den Wälzfräser 3.

Der auf der Spanneinrichtung 4 gespannte Wälzfräser 3 ist erfindungsgemäß gegenüber den anderen Teilen des Werkzeughalters 2 einfach handhabbar einzurichten bzw. zu zentrieren. Zentrierspannstück 5 und Aufnahmedorn 6 formen nämlich je einen Flansch 34 bzw. 35 aus, um an die Spindel 29 und den Gegenhalter 30 anschließen zu können. Spindel 29 und Gegenhalter 30 sind in den jeweiligen Flansch 34, 35 von Zentrierspannstück 5 und Aufnahmedorn 6 eingepasst. Diese Flansche 34 und 35 sind mit einem Radialstelltrieb 36, 37 versehen, die diametral gegenüberliegende Stellglieder 38 und 39 aufweisen und radial gegen die Spindel 29 bzw. Gegenhalter 30 verstellt werden können. Diese Stellglieder 38 und 39 sind als Stiftschrauben ausgeführt. Ein vergleichsweise hoher Rundlauf des Wälzfräsers 3 ist damit standfest sichergestellt.

Im Allgemeinen wird erwähnt, das die Spindel 29 selbst eine Werkzeugspindel darstellen oder auch mit der Werkzeugspindel drehfest verbunden sein kann, um damit das Werkzeug bzw. den Wälzfräsers 3 anzutreiben.

Die radiale Aufspannung des Wälzfräsers 3 wird erfindungsgemäß erzeugt, indem der Spanneinrichtung 4 zwei mit dem Spannanker 7 wirkverbundene Spannelemente 9, 10 zugeordnet werden, die zwischen Spannanker 7 und Zentrierspannstück 5 oder Aufnahmedorn 6 vorgesehen sind. Durch die Zug- bzw. Druckbelastung des Spannankers 7 auf die beiden Spannelemente 9, 10 erzeugen diese eine Pressung zwischen dem Zentrierspannstück 5 oder dem Aufnahmedorn 6 und dem Wälzfräser 3, da diese Spannelemente 9, 10 je einen Außenkonus 11 bzw. 12 aufweisen, die eine Keilwirkung auf Zentrierspannstück 5 und Aufnahmedorn 6 ausüben. Der Außenkonus 11, 12 wirkt sohin mit dem Zentrierspannstück 5 oder dem Aufnahmedorn 6 zur Erzeugung der radialen Aufspannung des Wälzfräsers 3 zusammen. Daher sind auch die Zapfen 13, 14 des Zentrierspannstücks 5 und Aufnahmedorns 6 nicht zwangsweise mit einer äußerst genauen Passung zu versehen, um einen vergleichsweise hohen Rundlauf am Wälzfräser 3 zu ermöglichen, wenn diese in die axiale Bohrung des Wälzfräsers 3 eingreifen. Die erfindungsgemäße Spanneinrichtung 4 ist daher konstruktiv einfach zu halten und gewährleistet dennoch hohe Rundlaufgenauigkeit.

Das hohle Zentrierspannstück 5 und der hohle Aufnahmedorn 6 bilden je einen Innenkonus 15, 16 aus, an den der Außenkonus 11, 12 des jeweiligen Spannelements 9, 10 anliegt. Damit ist eine geringe Anzahl an Fugen zwischen Spannanker 7 und Wälzfräser 3 zu erreichen. Zudem kann durch diese beiden zusammenwirkenden Spannflächen eine feinfühlige Zentrierung des Wälzfräsers 3 gegenüber der Spanneinrichtung 4 vorgenommen werden. Ein hoher Rundlauf ist somit sichergestellt.

Mechanisch sind die Spannelemente 9, 10 mit dem Spannanker 7 gekoppelt bzw. über ein Gewinde wirkverbunden. Am Spannanker 7 ist ein Außengewinde 17, an den Spannelementen 9, 10 sind Innengewinde 18 vorgesehen, die ineinander eingreifen.

Die Spannelement 9, 10 bilden je einen radialen Spannbund 19, 20 aus. Diese Spannbünde 19, 20 liegen an den jeweiligen Steg 21, 22 des Zentrierspannstücks 5 oder Aufnahmedorns 6 an, und verspannen diese somit axial. Da diese Stege 21, 22 auch einen radialen Bund 23, 24 für den Wälzfräser 3 ausbilden, kann ein direkter Wirkverbund zwischen Spannbund 19, 20 und Wälzfräser 3 eine feinfühlig einstellbare axiale Aufspannung ermöglichen.

Diese radialen Spannbünde 19, 20 lagern auch je einen Axialstelltrieb 25, 26, der mehrere diametral gegenüberliegende Stellglieder 27, 28 aufweist. Diese als Stiftschrauben ausgeführte Stellglieder 27, 28 sind axial gegen den Steg 21, 22 verstellbar. Die Axialstelltriebe 25, 26 erleichtern das axiale und radiale Aufspannen des Wälzfräser 3.

Diese radiale Aufspannung kann durch eine nicht näher dargestellte Passfeder zwischen Wälzfräser 3 und Spanneinrichtung 4 verstärkt werden.

Zur Ausbildung eines Vorsatzkopfs 1, sind dem Werkzeughalter 2 eine Spindel 29 und ein Gegenhalter 30 zugeordnet, die beide über Radiallager 32 mit einem Träger 33 verbunden sind, was der Fig. 1 entnommen werden kann.

Außerdem ist der Fig. 2 zu entnehmen, dass die Flansche 34 und 45 über Schraubverbindungen 40 mit dem Gegenhalter 30 bzw. der Spindel 29 verbunden sind, um einen belastbaren Anschluss zu schaffen.

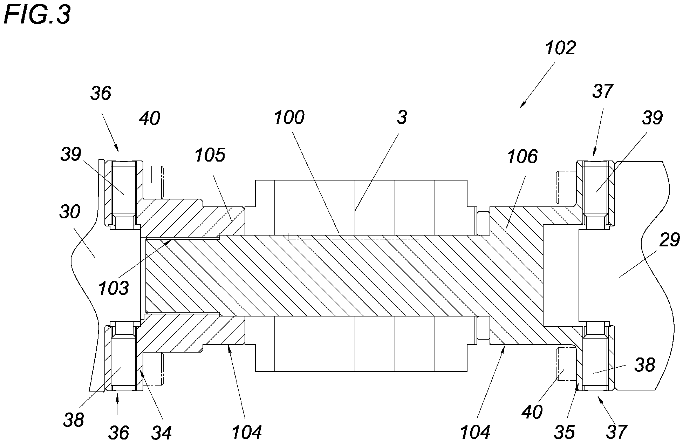

Gemäß Fig. 3 wird ein alternativer Werkzeughalter 102 nach einem zweiten Ausführungsbeispiel näher dargestellt. Dieser Werkzeughalter 102 unterscheidet sich gegenüber dem Werkzeughalter 2 nach Fig. 2 im Wesentlichen durch eine andere konstruktive Ausführung seiner Spanneinrichtung 104. Diese kommt nämlich ohne einen Spannanker 7 aus. Um Zentrierspannstück 105 und Aufnahmedorn 106 dennoch miteinander verspannen zu können, weist der einstückige Aufnahmedorn 106 ein Außengewinde 103 auf, auf dem das einstückige Zentrierspannstück 105 in der Art einer Mutter aufgeschraubt ist. Damit kann der Wälzfräser 3 axial aufgespannt werden.

Die Übertragung des Drehmoments stellt eine strichpunktiert dargestellte Spannfeder 100 sicher, die zwischen Aufnahmedorn 106 und Wälzfräser 3 vorgesehen ist. Außerdem wird durch ein enges Passungsspiel zwischen Spannfeder 100 und Aufnahmedorn 106 bzw. Spannfeder 100 und Wälzfräser 3 eine ausreichend hohe Standfestigkeit der Zentriergenauigkeit sichergestellt.

Zentrierspannstück 105 und Aufnahmedorn 106 sind (gleichwie nach dem Ausführungsbeispiel nach Fig. 2) mit einem Flansch 34, 35 ausgestattet. Die Flansche 34 und 35 lagern Radialstelltriebe 36, 37 mit gegen die Spindel 29 bzw. den Gegenhalter 30 verstellbaren Stellgliedern 38, 39, um damit die Spanneinrichtung 104 einfach handhabbar zentrieren zu können.

## Patentansprüche

1. Werkzeughalter für einen Wälzfräser (3) in Bohrungsausführung mit einer zwischen einer Spindel (29) und einem Gegenhalter (30) vorgesehenen Spanneinrichtung (4, 104), die ein, insbesondere in den Wälzfräser (3) eingreifbares, Zentrierspannstück (5, 105) und einen in den Wälzfräser (3) eingreifbaren Aufnahmedorn (6, 106) aufweist, der mit dem Zentrierspannstück (5, 105) zum Aufspannen des Wälzfräsers (3) verspannt ist, wobei das Zentrierspannstück (5, 105) und der Aufnahmedorn (6, 106) je einen Flansch (34, 35) aufweisen, **dadurch gekennzeichnet, dass** die Flansche (34, 35) je einen Radialstelltrieb (36, 37) mit wenigstens einem gegen die Spindel (29) bzw. den Gegenhalter (30) verstellbaren Stellglied (38, 39) zur Zentrierung der Spanneinrichtung (4, 104) lagern.

2. Werkzeughalter nach Anspruch 1, **dadurch gekennzeichnet, dass** die Spindel (29) und/oder der Gegenhalter (30) in den jeweiligen Flansch (34, 35) von Zentrierspannstück (5, 105) oder Aufnahmedorn (6, 106) eingepasst ist bzw. sind und das Stellglied (38, 39) radial gegen die Spindel (29) bzw. den Gegenhalter (30) verstellbar ist.

3. Werkzeughalter nach Anspruch 2, **dadurch gekennzeichnet, dass** der Radialstelltrieb (36, 37) mehrere diametral gegenüberliegende Stellglieder (38, 39), insbesondere Stiftschrauben, aufweist.

4. Werkzeughalter nach Anspruch 1, 2 oder 3, **dadurch gekennzeichnet, dass** Zentrierspannstück (5, 105) und Aufnahmedorn (6, 106) jeweils einstückig ausgebildet sind.

5. Werkzeughalter nach einem der Ansprüche 1 bis 4, **dadurch gekennzeichnet, dass** die Spanneinrichtung (4) einen Spannanker (7) aufweist, der Zentrierspannstück (5) und Aufnahmedorn (6) axial verbindet und diese miteinander verspannt.

6. Werkzeughalter nach Anspruch 5, **dadurch gekennzeichnet, dass** die Spanneinrichtung (4) mindestens ein mit dem Spannanker (7) wirkverbundenes Spannelement (9, 10) aufweist, das zwischen Spannanker (7) und Zentrierspannstück (5) oder Aufnahmedorn (6) vorgesehen ist und mit diesen zur Erzeugung einer radialen Aufspannung des Wälzfräsers (3) zusammenwirkt.

7. Werkzeughalter nach Anspruch 6, **dadurch gekennzeichnet, dass** Zentrierspannstück (5) und/oder Aufnahmedorn (6) einen Innenkonus (15, 16) aufweist/aufweisen, an dem ein Außenkonus (11, 12) des jeweiligen Spannelements (9, 10) anliegt.

8. Werkzeughalter nach Anspruch 6 oder 7, **dadurch gekennzeichnet, dass** je ein Spannelement (9, 10) für Zentrierspannstück (5) und Aufnahmedorn (6) vorgesehen ist.

9. Werkzeughalter nach Anspruch 6, 7 oder 8, **dadurch gekennzeichnet, dass** der Spannanker (7) das hohle Zentrierspannstück (5) und den hohlen Aufnahmedorn (6) durchgreift.

10. Werkzeughalter nach einem der Ansprüche 6 bis 9, **dadurch gekennzeichnet, dass** der Spannanker (7) mit seinem Außengewinde (17) in ein Innengewinde (18) des jeweiligen Spannelements (10) eingreift.

11. Werkzeughalter nach einem der Ansprüche 6 bis10, **dadurch gekennzeichnet, dass** mindestens ein Spannelement (9, 10) einen radialen Spannbund (19, 20) aufweist, der an einen Steg (21, 22) des Zentrierspannstücks (5) oder des Aufnahmedorns (6) anliegt.

12. Werkzeughalter nach Anspruch 11, **dadurch gekennzeichnet, dass** der radiale Spannbund (19, 20) einen Axialstelltrieb (25, 26) mit mindestens einem axial gegen den Steg (21, 22) verstellbaren Stellglied (27, 28) lagert.

13. Werkzeughalter nach Anspruch 12, **dadurch gekennzeichnet, dass** der Axialstelltrieb (25, 26) mehrere diametral gegenüberliegende Stellglieder (27, 28), insbesondere Stiftschrauben, aufweist.

14. Werkzeughalter nach Anspruch 11, 12 oder 13, **dadurch gekennzeichnet, dass** der Steg (21, 22) des Zentrierspannstücks (5) oder des Aufnahmedorns (6) einen radialen Bund (23, 24) für den Wälzfräser (3) ausbildet.

15. Vorsatzkopf mit einer Spindel (39), mit einem Gegenhalter (30) und mit einem Werkzeughalter (2, 102) nach einem der Ansprüche 1 bis 14 und mit Radiallager (32), die zwischen Träger (33) und Spindel (29) und zwischen Träger (33) und Gegenhalter (30) vorgesehen sind.

## Claims

1. Tool holder for a hob (3) in a bore design, having a clamping device (4, 104) provided between a spindle (29) and a counter-holder (30), which device has a centering clamping piece (5, 105), that more particularly can engage into the hob (3), and an arbor (6, 106) that can engage into the hob (3), which arbor is braced together with the centering clamping piece (5, 105) in order to mount the hob (3), wherein the centering clamping piece (5, 105) and the arbor (6, 106) each have a flange (34, 35), **characterized in that** flange (34, 35) each support a radial setting drive (36, 37) having at least one setting element (38, 39) that can be adjusted against the spindle (29) or the counter-holder (30), for centering the clamping device (4, 104).

2. Tool holder according to claim 1, **characterized in that** the spindle (29) and/or the counter-holder (30) is/are fitted into the respective flange (34, 35) of centering clamping piece (5, 105) or arbor (6, 106), and the setting element (38, 39) can be radially adjusted against the spindle (29) or the counter-holder (30).

3. Tool holder according to claim 2, **characterized in that** the radial setting drive (36, 37) has multiple setting elements (38, 39), more particularly stud screws, that lie diametrically opposite one another.

4. Tool holder according to claim 1, 2 or 3, **characterized in that** centering clamping piece (5, 105) and arbor (6, 106) are each configured in one piece.

5. Tool holder according to one of claims 1 to 4, **characterized in that** the clamping device (4) has a clamping anchor (7) that axially connects centering clamping piece (5) and arbor (6) and braces them relative to one another.

6. Tool holder according to claim 5, **characterized in that** the clamping device (4) has at least one clamping element (9, 10) operatively connected with the clamping anchor (7), which element is provided between clamping anchor (7) and centering clamping piece (5) or arbor (6), and interacts with these to produce radial mounting of the hob (3).

7. Tool holder according to claim 6, **characterized in that** centering clamping piece (5) and/or arbor (6) has/have an inner cone (15, 16) against which an outer cone (11, 12) of the respective clamping element (9, 10) rests.

8. Tool holder according to claim 6 or 7, **characterized in that** a clamping element (9, 10) is provided, in each instance, for centering clamping piece (5) and arbor (6).

9. Tool holder according to claim 6, 7 or 8, **characterized in that** the clamping anchor (7) passes through the hollow centering clamping piece (5) and the hollow arbor (6).

10. Tool holder according to one of claims 6 to 9, **characterized in that** the clamping anchor (7) engages into an inside thread (18) of the respective clamping element (10) with its outside thread (17).

11. Tool holder according to one of claims 6 to 10, **characterized in that** at least one clamping element (9, 10) has a radial clamping collar (19, 20), which lies against a crosspiece (21, 22) of the centering clamping piece (5) or of the arbor (6).

12. Tool holder according to claim 11, **characterized in that** the radial clamping collar (19, 20) supports an axial setting drive (25, 26) having at least one setting element (27, 28) that is axially adjustable against the crosspiece (21, 22).

13. Tool holder according to claim 12, **characterized in that** the axial setting drive (25, 26) has multiple diametrically opposite setting elements (27, 28), more particularly stud screws.

14. Tool holder according to claim 11, 12 or 13, **characterized in that** the crosspiece (21, 22) of the centering clamping piece (5) or of the arbor (6) forms a radial collar (23, 24) for the hob (3).

15. Attachment head having a spindle (39), having a counter-holder (30), and having a tool holder (2, 102) according to one of claims 1 to 14, and having radial bearings (32) that are provided between support (33) and spindle (29) and between support (33) and counter-holder (30).

## Revendications

1. Porte-outil pour une fraise-mère développante (3) réalisé comme un alésage avec un dispositif de serrage (4, 104) prévu entre une broche (29) et une lunette (30), qui présente un étau de centrage (5, 105), en particulier capable de se mettre en prise dans la fraise-mère développante (3), et un mandrin de fixation (6, 106) pouvant se mettre en prise dans la fraise-mère développante (3), qui est serré avec l'étau de centrage (5, 105) pour serrer la fraise-mère développante (3), l'étau de centrage (5, 105) et le mandrin de fixation (6, 106) présentant chacun une bride (34, 35), **caractérisé en ce que** les brides (34, 35) supportent chacune un mécanisme de réglage radial (36, 37) avec au moins un organe de réglage (38, 39) réglable vers la broche (29) ou la lunette (30) pour centrer le dispositif de serrage (4, 104).

2. Porte-outil selon la revendication 1, **caractérisé en ce que** la broche (29) et/ou la lunette (30) sont ajustées dans la bride (34,35) correspondante de l'étau de centrage (5, 105) ou du mandrin de fixation (6, 106) et l'organe de réglage (38, 39) peut être déplacé dans le sens radial vers la broche (29) ou la lunette (30).

3. Porte-outil selon la revendication 2, **caractérisé en ce que** le mécanisme de réglage radial (36, 37) présente plusieurs organes de réglage (38, 39) diamétralement opposés, en particulier des goupilles filetées.

4. Porte-outil selon la revendication 1, 2 ou 3, **caractérisé en ce que** l'étau de centrage (5, 105) et le mandrin de fixation (6, 106) sont réalisés chacun d'une pièce.

5. Porte-outil selon l'une des revendications 1 à 4, **caractérisé en ce que** le dispositif de serrage (4) présente un tirant de serrage (7) qui relie l'étau de centrage (5) et le mandrin de fixation (6) dans le sens axial et les serre ensemble.

6. Porte-outil selon la revendication 5, **caractérisé en ce que** le dispositif de serrage (4) présente au moins un élément de serrage (9, 10) en liaison active avec le tirant de serrage (7), qui est prévu entre le tirant de serrage (7) et l'étau de centrage (5) ou le mandrin de fixation (6) et coopère avec ceux-ci pour produire un serrage radial de la fraise-mère développante (3).

7. Porte-outil selon la revendication 6, **caractérisé en ce que** l'étau de centrage (5) et/ou le mandrin de fixation (6) présentent un cône intérieur (15, 16) sur lequel repose un cône extérieur (11, 12) de l'élément de serrage (9, 10) correspondant.

8. Porte-outil selon la revendication 6 ou 7, **caractérisé en ce qu'**un élément de serrage (9, 10) est prévu pour l'étau de centrage (5) et un autre pour le mandrin de fixation (6).

9. Porte-outil selon la revendication 6, 7 ou 8, **caractérisé en ce que** le tirant de serrage (7) traverse l'étau de centrage (5) creux et le mandrin de fixation (6) creux.

10. Porte-outil selon l'une des revendications 6 à 9, **caractérisé en ce que** le tirant de serrage (7) se met en prise par son filetage extérieur (17) dans un filetage intérieur (18) de l'élément de serrage (10) correspondant.

11. Porte-outil selon l'une des revendications 6 à 10, **caractérisé en ce qu'**au moins un élément de serrage (9, 10) présente un collet de serrage radial (19, 20) qui repose sur une barrette (21, 22) de l'étau de centrage (5) ou du mandrin de fixation (6).

12. Porte-outil selon la revendication 11, **caractérisé en ce que** le collet de serrage radial (19, 20) supporte un mécanisme de réglage axial (25, 26) avec au moins un organe de réglage (27, 28) réglable dans le sens axial vers la barrette (21, 22).

13. Porte-outil selon la revendication 12, **caractérisé en ce que** le mécanisme de réglage axial (25, 26) présente plusieurs organes de réglage (27, 28) diamétralement opposés, en particulier des goupilles filetées.

14. Porte-outil selon la revendication 11, 12 ou 13, **caractérisé en ce que** la barrette (21, 22) de l'étau de centrage (5) ou du mandrin de fixation (6) forme un collet radial (23, 24) pour la fraise-mère développante (3).

15. Tête rapportée avec une broche (39), avec une lunette (30) et avec un porte-outil (2, 102) selon l'une des revendications 1 à 14 et avec des roulements radiaux (32) prévus entre le support (33) et la broche (29) et entre le support (33) et la lunette (30).
